# EUROPEAN PATENT APPLICATION

(11) **EP 4 726 991 A1**
(43) Date of publication of application: **15.04.2026**
(21) Application number: 24205653.9
(22) Date of filing: 09.10.2024
(51) Int. Cl.: H02M 3/156, H02M 3/158, H02M 7/483, H02M 1/32

(54) **VOLTAGE BALANCING CIRCUIT FOR SERIES CONNECTED DEVICES**

(71) Applicant: ABB SCHWEIZ AG, 5400 Baden (CH)
(72) Inventor: CHRISTEN, Daniel, 8610 Uster (CH); BOEHLER, Julian, 8006 Zürich (CH); ROTHMUND, Daniel, 5243 Mülligen (CH); STOJADINOVIC, Milos, 5400 Baden (CH); PETTERSSON, Sami, 8953 Dietikon (CH); CANALES, Francisco, 5405 Baden-Dättwil (CH)
(74) Representative: Zimmermann & Partner Patentanwälte mbB

(57) **Abstract**

A converter is configured to set a first converter state with a first high-side switch (S₁₁) and a second high-side switch (S₁₂) being switched on, a first-stage low-side switch (S_{b12}) being switched on, and a first low-side switch (S₂₁) and a second low-side switch (S₂₂) being switched off. The converter is further configured to set a second converter state with the first low-side switch (S₂₁) and the second low-side switch (S₂₂) being switched on, the first-stage high-side switch (S_{b11}) being switched on, and the first high-side switch (S₁₁) and the second high-side switch (S₁₂) being switched off. The converter may enable to balance one or more voltages across the switches of the switching unit at least in part. This may alleviate, for example, an overvoltage at one of the switches of the switching unit.

## Description

The present disclosure relates to a converter, a method of operating a converter, and an according computer program for executing the method.

### Technical background

Converters are known electronic circuits that can be used for various applications. For example, power converters can be used for generating an alternating current, typically from a direct current source (or vice versa). In other examples, a power converter can also be used for rectifying voltages.

Converters become increasingly relevant due to advances in fields such as electrified transportation, data centers, renewable energy production, transmission, and utilization, as well as many other industrial fields requiring a conversion of electric power.

Converters often utilize electronic switches, such as power switches, to generate the desired output power or output voltages. For example, a half-bridge configuration may be part of a converter with the half-bridge configuration having power switches to generate the desired output.

For some applications a high voltage capability of the converter may be needed.

In medium voltage applications, a single switch in a half-bridge configuration can be realized by series connected devices in order to achieve the required voltage capability. These series connected devices can be switched simultaneously like a single switch. However, du to non-idealities in the circuit, the devices, or the switching signals the equal voltage sharing among the series connected devices can be lost. A balancing of the voltages across the devices may be beneficial.

### Summary of the invention

A first aspect of the present disclosure relates to a converter comprising: a first-stage bus comprising a first first-stage node and a second first-stage node.

The converter further comprises a switch unit comprising: a first high-side switch, a second high-side switch, a first low-side switch, and a second low-side switch connected in series between the first first-stage node and the second first-stage node; an output node defined between the first high-side switch and the first low-side switch.

The converter further comprises a first stage comprising: a first-stage voltage divider connected between the first first-stage node and the second first-stage node. The first-stage voltage divider comprising a first first-stage voltage divider capacitor and a second first-stage voltage divider capacitor connected in series, defining a first voltage divider node between the first first-stage voltage divider capacitor and the second first-stage voltage divider capacitor.

The first stage further comprises a first-stage balancing capacitor connected in parallel to the first high-side switch and the first low-side switch.

The first stage further comprises a first-stage balancing unit comprising: a first-stage high-side switch and a first-stage low-side switch connected in series via a first-stage balancing unit node, the first-stage balancing unit node being coupled to the first-stage voltage divider node, the first-stage balancing unit being connected parallel to the first-stage balancing capacitor.

The converter further comprises a controller for controlling the switches of the converter, the controller configured to: set a first converter state with: the first high-side switch and the second high-side switch being switched on, the first-stage low-side switch being switched on, the first low-side switch and the second low-side switch being switched off; set a second converter state with: the first low-side switch and the second low-side switch being switched on, the first-stage high-side switch being switched on, the first high-side switch and the second high-side switch being switched off.

The converter may enable that at a high voltage capability is achieved. For example, the converter may be configured such that the first high-side switch and the second high-side switch may function as substantially one switch, and such that the first low-side switch and the second low-side switch may function as substantially one switch.

To illustrate an example, if the first high-side switch and the second high-side switch are turned on at substantially the same time, this may be considered electrically as a single high-side switch being turned on (since a current path through the first and second high-side switch is generated substantially at the same time). Accordingly, if the first high-side switch and the second high-side switch are turned off at substantially the same time, this may be considered electrically as a single high-side switch being turned off (since a current path through the first and second high-side switch is blocked substantially at the same time). The same may accordingly be applicable to the first and second low-side switches, which may function as a single low-side switch being turned on or off.

Such a configuration, where multiple switches function together as a single switch in view of a respective switching scheme may be termed herein as a multi-switch-to-single-switch configuration.

To illustrate an example, in the first converter state, the two high-side switches of the switching unit are switched on, and the two low-side switches of the switching unit are switched off, such that functionally in the first converter state it may be regarded that a single high-side switch (defined by the first and second high-side switches) is switched on and a single low-side switch (defined by the first and second low-side switches) is switched off. The same functional view may be applied to the second converter state, with the switching configuration being reversed compared to the first converter state.

As described herein, an output node is defined between the first high-side switch and the first low-side switch. In view of the above-mentioned multi-switch-to-single-switch configuration, this can functionally be understood as an output node being present between a single high-side switch (defined by the first and second high-side switches) and a single low-side switch (defined by the first and second low-side switches). The output node may be the node of the circuit which is the output of the converter. For example, the output node may be used for coupling to an output terminal which may be a physical connector coupled to the output node. The physical connector may be connected to further one or more components that can receive the output signal of the converter.

The switching time of the multiple switches that can electrically function as a single switch may slightly differ due to tolerances or variances in the driving electronics of the switches (e.g., causing variances in the switching behavior) and/or due to tolerances or variances of the devices themselves. For example, it may be the case that it is desired that both the first high-side switch and the second high-side switch are turned on at the same time. However, in reality one of the first high-side switch or the second high-side switch may turn on earlier or later than the other high-side switch of the switching unit. In another example, both high-side switches may be turned on. Ideally, the voltage across the first high-side switch and the voltage across the second high-side switch should be the same when assuming that the same type of switches were used. However, in reality the voltage across the turned on first high-side switch and the voltage across the turned on second high-side switch may differ (e.g., due to the herein described tolerances or variances). Due to the potential effects that come from the herein described tolerances undesired electrical effects to the circuit may be caused, for example, an overvoltage at one of the switches of the switching unit.

According to the present disclosure, the herein described converter may enable to balance one or more voltages across the switches of the switching unit at least in part. This may alleviate undesired electrical effects to the circuit, for example, an overvoltage at one of the switches of the switching unit.

Subsequently, the concepts of the balancing of the switching unit are described in more detail.

The first-stage bus may comprise a DC bus for providing a DC voltage. For example, a DC voltage may be applied between the first first-stage node and the second first-stage node by the DC bus. The DC voltage may be applied to the first-stage bus by an according power source. For example, the first first-stage node may be set onto a positive potential, wherein the second first-stage node may be set on a reference potential (or a negative potential with respect to the positive potential).

In an example, the second high-side switch may be coupled to the first first-stage node and the second low-side switch may be coupled to the second first-stage node.

In general, in the present disclosure, coupling of a first electrical component to a second electrical component or coupling of an electrical component to a node (or coupling of a first node to a second node) may comprise that one or more electrical components can be present between the first electrical component and the second electrical component or can be present between the electrical component and the node (or between the first node and the second node). The same may apply when an electrical unit is being described as being coupled to another electrical unit or node or other electrical component.

For example, the second high-side switch may be directly connected to the first first-stage node and the second low-side switch may be directly connected to the second first-stage node. In another example, the second high-side switch may be coupled to the first first-stage node via one or more electrical components (e.g., one or more resistive elements) being present between the first first-stage node and the second high-side switch. The second low-side switch may be coupled to the second first-stage node via one or more electrical components (e.g., one or more resistive elements) being present between the second first-stage node and the second low-side switch.

As described herein, the first stage comprises a first-stage voltage divider connected between the first first-stage node and the second first-stage node. The first-stage voltage divider comprises a first first-stage voltage divider capacitor and a second first-stage voltage divider capacitor connected in series. For example, the first first-stage voltage divider capacitor may be connected to the first first-stage node and the second first-stage voltage divider capacitor. The second first-stage voltage divider capacitor may be connected to the first first-stage voltage divider and the second fiststage node.

Between the first first-stage voltage divider capacitor and the second first-stage voltage divider capacitor a first voltage divider node may be defined.. In an example, a voltage across the first first-stage voltage divider capacitor may substantially be the same as a voltage across the second first-stage voltage divider capacitor. For example, if a DC voltage is applied to the DC bus with the second first-stage node being at the reference potential, the first first-stage node being at a DC supply voltage, the voltage across the first first-stage voltage divider capacitor may be half of the DC supply voltage and the voltage across the second first-stage voltage divider capacitor (e.g., the potential difference from the first voltage divider node to the second first-stage node) may also be half of the DC supply voltage.

The converter may be configured that the first and second first-stage voltage divider capacitors are well balanced. For example, this can be achieved by active balancing or by a passive resistive network.

The (active or passive) voltage balancing of the first-stage voltage divider may ensure, that the voltage across the first-stage voltage divider capacitors can remain substantially the same for a given voltage applied to the first-stage bus (e.g., a particular DC supply voltage). This may ensure that the first voltage divider node can be kept substantially at the same potential. This may enable that the herein described balancing of the converter switches can be ensured in a defined manner.

For example, the voltage balancing of the first and second first-stage voltage divider capacitors may be provided by one or more resistors coupled to the first first-stage voltage divider capacitor, and one or more resistors coupled to the second first-stage voltage divider capacitor. The capacitances of the first and second first-stage voltage divider may not necessarily be the same.

As described herein, the first stage further comprises a first-stage balancing capacitor connected in parallel to the first high-side switch and the first low-side switch of the switching unit.

In general, according to the present disclosure, if a first electrical component (or first electrical unit) is connected in parallel to a second electrical component (or second electrical unit) this may comprise that one or more further components may be connected in series to the first electrical component (or first electrical unit), and that the first electrical component (or first electrical unit) and the one or more further components are forming an electrical unit with the electrical unit being parallel to the second electrical component (or second electrical unit). For example, an electrical unit may be defined by two electrical components being connected in series.

In general, according to the present disclosure, if a first electrical component (or first electrical unit) is connected in series to a second electrical component (or second electrical unit) this may comprise that, potentially, one or more further components may be connected in series between the first electrical component (or first electrical unit) and the second electrical component (or second electrical unit).

To illustrate an example, for the first-stage balancing capacitor being connected in parallel to the first high-side switch and first low-side switch the according configuration may comprise that the first-stage balancing capacitor is parallel to the first high-side switch and the first-low side switch without any further electrical components being connected in series to the first-stage balancing capacitor.

In another, example, with the first-stage balancing capacitor being connected in parallel to the first high-side switch and first low-side switch may comprise that a further electrical component is in series to the first-stage balancing capacitor and that the further electrical component and the first-stage balancing capacitor form an electrical unit which is connected in parallel to the first high-side switch and the first low-side switch.

In an example, the first high-side switch and the second high-side switch may be connected in series via a first high-side switch unit node. The first low-side switch and the second low-side switch may be connected in series via a first low-side switch unit node. The first-stage balancing capacitor may be connected in parallel to the first high-side switch and the first low-side switch via the first high-side switch unit node and the first low-side switch unit node.

As described herein, the first-stage balancing unit comprises a first-stage high-side switch and a first-stage low-side switch connected in series via a first-stage balancing unit node. For example, the first-stage high-side switch and the first-stage low-side switch may both be directly connected to the first-stage balancing unit node. In another example, the first-stage high-side switch and the first-stage low-side switch may be coupled to the first-stage balancing unit node via one or more further electrical components, for example, one or more resistive elements (as described herein).

As described herein, the first-stage balancing unit node is coupled to the first-stage voltage divider node. For example, the first-stage balancing unit node and the first-stage voltage divider node may be directly connected (e.g., via a conductor line) or the first-stage balancing unit node and the first-stage voltage divider node may form the same node in the circuit. In an example, no further electrical component may be placed between the first-stage balancing unit node and the first-stage voltage divider node. In another example, one or more electrical components may be placed between the first-stage balancing unit node and the first-stage voltage divider node in the circuit, e.g., one or more resistive elements (as described herein).

As described herein, the first-stage balancing unit may be connected parallel to the first-stage balancing capacitor. For example, the series connection of the first-stage high-side switch and the first-stage low-side switch may be connected in parallel to the first-stage balancing capacitor.

The first-stage high-side switch and the first-stage low-side switch may be turned on or off, respectively by the controller. In accordance with the present disclosure this may enable an electrical interplay of the balancing unit with the first voltage divider node and the first-stage balancing capacitor and the switches of the switch unit which may ensure the herein described balancing.

Notably, the herein described balancing can be enabled when a certain state of the switches is present.

In an example, the herein described balancing may be achieved when the controller sets the first converter state. In the first converter state the first high-side switch and the second high-side switch are switched on, the first-stage low-side switch is switched on, the first low-side switch and the second low-side switch are switched off.

In an example, the herein described balancing may be achieved when the controller sets the second converter state. In the second converter state the first low-side switch and the second low-side switch are switched on, the first-stage high-side switch is switched on, the first high-side switch and the second high-side switch are switched off.

The herein described converter states having particular switching configurations may relate to the end result of a switching process. For example, when describing that in the first and second converter states certain switches are switched on or off, it can be understood that the according switches are in an on-state or an off-state, and that an according switching process had to occur to evoke the respective on- or off-states. There may be multiple switching steps possible to reach a certain converter state. When describing the switching configuration of the first converter state and/or the second converter state the switching sequence may not be part of the respective converter state, rather the respective converter state is given by the end result of a switching process. To illustrate an example, when stating that in the first converter state the first high-side switch and the second high-side switch are switched on, the first-stage low-side switch is switched on, the first low-side switch and the second low-side switch are switched off, this may not imply that the switches are switched in a particular order. It can be understood as the end-result of a switching process where the first high-side switch and the second high-side switch are in an on-state, the first-stage low-side switch is in an on-state, the first low-side switch and the second low-side switch are in an off-state.

For example, in the first converter state when the first and second high-side switches are turned on, the first and second high-side switches may function as a single switch. Ideally, the voltage across the first high-side switch and the voltage across the second high-side switch should be the same. Due to the herein described variances or tolerances this may not always be the case. For example, in a real-world environment, the voltage across the first high-side switch may be different than the voltage across the second high-side switch in the first converter state. This may be coupled to the voltage across the first-stage balancing capacitor.

Due to the first-stage low-side switch being switched on in the first converter state the first-stage balancing capacitor and the first first-stage voltage divider capacitor may be electrically coupled to each other, since a conducting path is formed from the first voltage divider node through the turned on first-stage low-side switch to the first-stage balancing capacitor. Due to the voltage divider stabilities (for example due to an active balancing or a passive resistive network) the voltage across the first first-stage voltage divider capacitor is kept substantially the same. This may enable, that the voltage across the first-stage balancing capacitor is accordingly adapted due to the electrical bridge to the first voltage divider capacitor provided by the turned on first-stage low-side switch. The according adaptation of the voltage across the first-stage balancing capacitor may enable that the voltage across the first high-side switch and the first low-side switch can be accordingly balanced in the first converter state.

A similar balancing approach may be enabled for the second converter state, when the first and second low-side switches are turned on. For example, in the second converter state, the first and second low-side switches may function as a single switch.

Ideally, the voltage across the first low-side switch and the voltage across the second low-side switch should be the same. Due to variances or the herein described tolerances this may not always be the case. For example, in a real-world environment, the voltage across the first low-side switch may be different than the voltage across the second low-side switch in the second converter state. This may be coupled to the voltage across the first-stage balancing capacitor.

Due to the first-stage high-side switch being switched on in the second converter state the first-stage balancing capacitor and the second first-stage voltage divider capacitor may be electrically coupled to each other, since a conducting path is formed from the first voltage divider node through the turned on first-stage high-side switch to the first-stage balancing capacitor. Due to the voltage divider stabilities (for example due to an active balancing or a passive resistive network) the voltage across the second first-stage voltage divider capacitor is kept substantially the same. This may enable, that the voltage across the first-stage balancing capacitor is accordingly adapted due to the electrical bridge to the second first-stage voltage divider capacitor provided by the turned on first-stage high-side switch. The according adaptation of the voltage across the first-stage balancing capacitor may enable that the voltage across the first high-side switch and the first low-side switch can be accordingly balanced in the second converter state.

The herein described controller may comprise a single control unit, multiple control units, and/or a controlling circuitry with the controller being capable of switching the switches of the switch unit and the first stage onto a defined state, particularly onto the first and second converter state.

For example, the controller may be physically coupled to the control inputs of the switches, with the controller being configured to apply a control signal to the control inputs such that the according switches of the converter are either turned on or off with respect to the herein described converter states. In an example, the controller may comprise one or more processors to generate the control signal. For example, the controller may comprise a memory comprising instructions that may cause the one or more processor to generate the control signal which causes the converter to be set into the herein described converter states.

The switches of the herein described converter, particularly the switches of the switch unit and the switches of the first stage may comprise any type of electrical switches. For example, the switches may comprise electronic switches, particularly semiconductor-based switches. For example, a switch of the herein described converter may comprise a MOSFET, IGBT, HEMT and/or IGCT.

In an example, the controller may be configured to, for setting the first converter state, turning the first and second high-side switches on at substantially the same time. This may ensure that the first and second high-side switches can function as a single switch, as described herein.

In an example, the controller may be configured to, for setting the second converter state, turning the first and second low-side switches on at substantially the same time. This may ensure that the first and second low-side switches can function as a single switch, as described herein.

In an example, the controller may be further configured to: in the set first converter state, having the first-stage high-side switch switched off; in the set second converter state, having the first-stage low-side switch switched off.

For example, in the first converter state the first high-side switch and the second high-side switch may be switched on, the first low-side switch and the second low-side switch may be switched off, the first-stage low-side switch may be switched on, and the first stage high-side switch may be switched off.

For example, in the second converter state the first high-side switch and the second high-side switch may be switched off, the first low-side switch and the second low-side switch may be switched on, the first-stage low-side switch may be switched off, and the first stage high-side switch may be switched on.

It should be noted, that there may be one or more switching operations to reach the switching configuration of the first converter state or of the second converter state (as described herein). In an example, the first converter state and second converter state may be regarded as fixed states which are held, respectively, for a predetermined period of time in a defined manner (e.g., to allow for balancing of the switches of the switch unit or for the desired switching operation of the switching unit). For example, the first and second converter state may not be regarded as a random or temporary dynamic state which is only present for an undefined period of time.

In an example, the converter may be configured such that: during the first converter state a first balancing circuit configuration is generated allowing an electrical current flow through the first-stage low-side switch, the first-stage balancing capacitor, the second high-side switch and the first-stage voltage divider node; and during the second converter state a second balancing circuit configuration is generated allowing an electrical current flow through the first-stage high-side switch, the first-stage balancing capacitor, the second low-side switch and the first-stage voltage divider node.

The first balancing circuit configuration may comprise an electrical loop having the first voltage divider capacitor and the first-stage balancing capacitor coupled to each other via the switched on first-stage low-side switch and the switched on second high-side switch of the switch unit.

The second balancing circuit configuration may comprise an electrical loop having the second voltage divider capacitor and the first-stage balancing capacitor coupled to each other via the switched on first-stage high-side switch and the switched on second low-side switch of the switch unit.

For example, in the first balancing circuit configuration during the first converter state the first voltage-divider capacitor and the first-stage balancing capacitor may be connected in parallel (for example, with the first-stage high-side switch being switched off, and the first-stage low-side switch being switched on in the first converter state). This may allow a current flow from the first voltage-divider capacitor to the first-stage balancing capacitor (or vice versa) in the first balancing circuit configuration. This may allow for a balancing of the first-stage balancing capacitor which may balance the voltage across the first high-side switch and the first low-side switch. Undesired voltage fluctuations across the switches of the switching unit may thus be reduced at least in part.

For example, in the second balancing circuit configuration during the second converter state the second voltage-divider capacitor and the first-stage balancing capacitor may be connected in parallel (for example, with the first-stage high-side switch being switched on, and the first-stage low-side switch being switched off in the first converter state). This may allow a current flow from the second voltage-divider capacitor to the first-stage balancing capacitor (or vice versa) in the second balancing circuit configuration. This may allow for a balancing of the first-stage balancing capacitor which may balance the voltage across the first high-side switch and the first low-side switch. Undesired voltage fluctuations across the switches of the switching unit may thus be reduced at least in part.

In an example, the first-stage balancing capacitor may be regarded as a quasi-flying capacitor. For example, the first-stage balancing capacitor may not be regarded as a standard flying capacitor since it may not be actively used in the power transfer of the converter or to provide an actively used voltage level. The first-stage balancing capacitor may the regarded as a quasi-flying capacitor since it can be used to stabilize a voltage across the switches of the switching unit.

In an example, the converter may be configured such that: in the first converter state and in the second converter state a voltage (e.g., V_{qFC}) across the first-stage balancing capacitor is balanced onto a balance voltage corresponding to a potential difference between the first-stage voltage divider node and the second first-stage node.

As described herein, if a DC voltage is applied to the DC bus with the second first-stage node being at the reference potential, the first first-stage node being at a DC supply voltage, the voltage across the first first-stage voltage divider capacitor may be half of the DC supply voltage and the voltage across the second first-stage voltage divider capacitor (e.g., a potential difference from the first voltage divider node to the second first-stage node) may also be half of the DC supply voltage.

In an example, the voltage across the first-stage balancing capacitor may be balanced onto half of the DC supply voltage.

In an example, the converter may be configured such that: in the first converter state a voltage (e.g., V_{qFC}) across the first-stage balancing capacitor is balanced onto a balance voltage corresponding to a voltage across the first voltage-divider capacitor. As described herein, in the first balancing circuit configuration the first voltage divider capacitor and the first-stage balancing capacitor may be connected in parallel wherein the voltage across the first voltage divider capacitor may be balanced (e.g., actively or passively as described herein). This may allow that the voltage across the first-stage balancing capacitor can follow the voltage across the first voltage divider capacitor. As described herein, this may allow for a balancing of the voltages across the switches of the switch unit.

In an example, the converter may be configured such that: in the second converter state a voltage (e.g., V_{qFC}) across the first-stage balancing capacitor is balanced onto a balance voltage corresponding to a voltage across the second voltage-divider capacitor. As described herein, in the second balancing circuit configuration the second voltage divider capacitor and the first-stage balancing capacitor may be connected in parallel wherein the voltage across the second voltage divider capacitor may be balanced (e.g., actively or passively as described herein). This may allow that the voltage across the first-stage balancing capacitor can follow the voltage across the second voltage divider capacitor. As described herein, this may allow for a balancing of the voltages across the switches of the switch unit.

In an example, the controller may be further configured to: set a transition state with: the first-stage low-side switch and the first-stage high-side switch being switched off; particularly wherein the controller is further configured to set the first converter state and/or second converter state via temporarily setting the transition state.

Subsequently, an exemplary change from the first converter state to the second converter state is described according to the present disclosure. For example, it can be assumed that the first converter state was set by the controller with the first and second high-side switches being switched on, the first and second low-side switches being switched off, and the first-stage low-side switch being switched on, and the first-stage high-side switch being switched off. When setting the second converter state, the controller may temporarily set the transition state, which comprises having the first-stage low-side switch turned off and the first-stage high-side switch turned off. When starting the transition, the following switching configuration may thus be set by the controller as a first transition state: the first and second high-side switches being switched on, the first and second low-side switches being switched off, and the first-stage low-side switch being switched off, and the first-stage high-side switch being switched off. Hence, both first-stage switches are switched off. Subsequently, the controller may be configured to set the switches of the switch unit according to their states in the second converter state, with the low-side switches being turned on and the high-side switches being turned off. This may be regarded a second transition state which may have the following configuration: the first and second high-side switches are switched off, the first and second low-side switches are switched on, and the first-stage low-side switch remains switched off, and the first-stage high-side switch remains switched off. Subsequently, the second converter state, as described herein, may be set by the controller by turning on the first-stage high-side switch (and keeping the first-stage low-side switch turned off).

Subsequently, an exemplary change from the second converter state to the first converter state is described according to the present disclosure. For example, it can be assumed that the second converter state was set by the controller with the first and second high-side switches being switched off, the first and second low-side switches being switched on, and the first-stage low-side switch being switched off, and the first-stage high-side switch being switched on. When setting the first converter state, the controller may temporarily set the transition state, which comprises having the first-stage low-side switch turned off and the first-stage high-side switch turned off. When starting the transition, the following switching configuration may thus be set by the controller as a first transition state: the first and second high-side switches being switched off, the first and second low-side switches being switched on, and the first-stage low-side switch being switched off, and the first-stage high-side switch being switched off. Hence, both first-stage switches are switched off. Subsequently, the controller may be configured to set the switches of the switch unit according to their states in the first converter state, with the low-side switches being turned off and the high-side switches being turned on. This may be regarded a second transition state which may have the following configuration: the first and second high-side switches are switched on, the first and second low-side switches are switched off, and the first-stage low-side switch remains switched off, and the first-stage high-side switch remains switched off. Subsequently, the first converter state, as described herein, may be set by the controller by turning on the first-stage low-side switch (and keeping the first-stage high-side switch turned off).

Subsequently, a first initializing of the converter according to the present disclosure is described. Initially, all switches of the switch unit and of the first stage may be switched off. Subsequently, the controller may turn on the first and second high-side switches substantially simultaneously. The low-side switches remain switched off. Then, the controller may turn on the first-stage low-side switch to set the first converter state.

Subsequently, a second initializing of the converter according to the present disclosure is described. Initially, all switches of the switch unit and of the first stage may be switched off. Subsequently, the controller may turn on the first and second low-side switches substantially simultaneously. The high-side switches remain switched off. Then, the controller may turn on the first-stage high-side switch to set the second converter state.

In an example, the first-stage balancing unit may comprise: a first current limiting resistor connected in series between the first-stage voltage divider node and the first-stage balancing unit node. The first current limiting resistor may enable to limit the current flowing between the first-stage voltage divider node and the first-stage balancing unit node which may reduce the risk of potentially high currents.

In an example, the first-stage balancing unit may comprise: a second current limiting resistor connected in series to the first-stage high-side switch; and/or a third current limiting resistor connected in series to the first-stage low-side switch. For example, the second current limiting resistor may be positioned between the first-stage high-side switch and the first-stage voltage divider node in the circuit. In another example, the second current limiting resistor may be positioned between the first-stage high-side switch and a node of the first-stage balancing capacitor (with the node being a first node of the two nodes where the first-stage balancing unit node is connected in parallel to the first-stage balancing capacitor).

For example, the third current limiting resistor may be positioned between the first-stage low-side switch and the first-stage voltage divider node in the circuit. In another example, the third current limiting resistor may be positioned between the first-stage low-side switch and a node of the first-stage balancing capacitor (with the node a second node of the two nodes where the first-stage balancing unit node is connected in parallel to the first-stage balancing capacitor).

In an example, the converter may further comprise: a level-2-stage bus comprising a first level-2-stage node and a second level-2-stage node; the switch unit further comprising: a third high-side switch connected in series between the second high-side switch and the first level-2-stage node; a third low-side switch connected in series between the second low-side switch and the second level-2-stage node.

In this example, the converter may further comprise a level-2-stage comprising: a level-2-stage voltage divider connected between the first level-2-stage node and the second level-2-stage node, the level-2-stage voltage divider comprising: a plurality of level-2-stage voltage divider capacitors connected in series, the plurality of level-2-stage voltage divider capacitors defining a first level-2-stage voltage divider node and defining a second level-2-stage voltage divider node.

The level-2-stage may further comprise a level-2-stage balancing unit comprising: a first level-2-stage high-side switch and a first level-2-stage low-side switch connected in series via a first level-2-stage balancing unit node, the first level-2-stage balancing unit node being coupled to the first level-2-stage voltage divider node, the first level-2-stage high-side switch and the first level-2-stage low-side switch being connected parallel to the first first-stage voltage divider capacitor.

In this example, the controller is further configured to: for the set first converter state: having the high-side switches of the switch unit switched on, having the low-side switches of the switch unit switched off; and having the first-stage low-side switch and the first level-2-stage low-side switch switched on.

The herein described example, comprising a level-2-stage balancing unit may also be termed herein as a level-2-stage-converter. The level-2-stage converter may also comprise the herein described first stage and the level-2-stage.

For the level-2-stage converter, the converter may be configured such that three high-side switches of the switch unit (the first, second and third high-side switch) may function as a single switch, as described herein. Accordingly, for the level-2-stage converter, the converter may be configured such that three low-side switches of the switch unit (the first, second and third low-side switch) may function as a single switch, as described herein.

The level-2-stage converter may thus also be regarded as a multi-switch-to-single-switch configuration. For example, in the first converter state when the first, second and third high-side switches are turned on, the first, second and third high-side switches may function as a single switch. The herein described level-2-stage converter may enable a balancing of the three high-side switches of the switch unit according to the balancing mechanism described herein.

In an example, the level-2-stage bus may comprise a DC bus. For example, a particular DC supply voltage may be applied to the first and second level-2-stage nodes (e.g., by an according power supply which may be coupled to terminals connected to the first and second level-2-stage nodes).

For example, the level-2-stage voltage divider may comprise three level-2-stage voltage divider capacitors. For example, the level-2-stage voltage divider may comprise a first level-2-stage voltage divider capacitor, a second level-2-stage voltage divider capacitor and a third level-2-stage voltage divider capacitor.

The converter may be configured that the level-2-stage voltage divider capacitors are well balanced. For example, this can be achieved by active balancing or by a passive resistive network. This may ensure, that the respective voltages across the level-2 stage voltage divider capacitors can remain substantially the same for a given voltage applied to the level-2-stage bus (e.g., a particular DC supply voltage applied between the first and second level-2-stage nodes).

In an example, the level-2-stage voltage divider capacitors may not necessarily have the same capacitances. For example, the voltage balancing of the capacitor by active balancing or by passive balancing may provide that the respective voltages across the level-2 stage voltage divider capacitors can remain substantially the same (as described herein for the first stage).

Subsequently, a level-2-stage balancing for the first converter state is described.

With the first level-2-stage high-side switch and the first level-2-stage low-side switch being connected in parallel to the first first-stage voltage divider capacitor a balancing mechanism which also accounts for the third high-side switch of the switching unit can be enabled since the first level-2-stage balancing unit node (between the first and second level-2-stage switches) is coupled to the first level-2-stage voltage divider node and thus coupled to the level-2-stage voltage divider.

In the first converter state the first level-2-stage low-side switch can be switched on such that a first level-2-stage voltage divider capacitor is coupled to the first first-stage voltage divider capacitor in the circuit, since an electrical path through the switched on first level-2-stage low-side switch is generated. A third balancing circuit configuration may be generated allowing a current flow through the first level-2-stage voltage divider capacitor, the first level-2-stage low-side switch, the first first-stage voltage divider capacitor and the third high-side switch of the switching unit. For example, in the third balancing circuit configuration an electrical loop may be formed having the first level-2-stage voltage divider capacitor, the first level-2-stage low-side switch, the first first-stage voltage divider capacitor and the third high-side switch of the switching unit connected to each other (via the first level-2-stage node). With the third balancing circuit configuration the voltage across the first first-stage voltage divider capacitor may follow the balanced voltage at the first level-2-stage voltage divider capacitor which may balance the voltages across the switches of the switching unit. In some examples, for the set first converter state, the controller may be configured to have the first level-2-stage high-side switch switched off.

Notably, for the first converter state, the balancing mechanism of the first stage may also apply with the level-2-stage integrated into the converter. For example, the balancing mechanism of the level-2-stage in the first converter state is also coupled to the first stage (particularly to the first-stage voltage divider capacitors) via the interaction of the level-2-stage voltage divider with the first-stage voltage divider via the switching configuration of the level-2-stage balancing unit switches in the first converter state. The interplay of the first stage and the level-2-stage may ensure that a balancing of the switches of the switch unit occurs in the first converter state, particularly for three high-side switches and three low-side switches of the switch unit. For example, in the first converter state the herein described third balancing circuit configuration in accordance with the level-2-stage balancing can be generated, and the first balancing circuit configuration in accordance with the first stage balancing can be generated.

In an example, the first level-2-stage voltage divider capacitor is directly connected to the first level-2-stage node. The second level-2-stage voltage divider capacitor may be connected to the first level-2-stage voltage divider capacitor with the first level-2-stage balancing unit node being defined between the first and second level-2-stage voltage divider node. The third level-2-stage voltage divider capacitor may be directly connected to the second level-2-stage node. The second level-2-stage voltage divider capacitor may be connected to the third level-2-stage voltage divider capacitor with the second level-2-stage balancing unit node being defined between the second and third level-2-stage voltage divider.

In an example, the level-2-stage balancing unit may further comprise: a second level-2-stage high-side switch and a second level-2-stage low-side switch connected in series via a second level-2-stage balancing unit node, the second level-2-stage balancing unit node being coupled to the second level-2-stage voltage divider node, the second level-2-stage high-side switch and the second level-2-stage low-side switch being connected parallel to the second first-stage voltage divider capacitor, the controller being further configured to: for the set second converter state: having the low-side switches of the switch unit switched on, having the high-side switches of the switching unit switched off, having the first-stage high-side switch and the second level-2-stage high-side switch switched on.

Subsequently, a level-2-stage balancing for the first converter state is described.

With the second level-2-stage high-side switch and the second level-2-stage low-side switch being connected in parallel to the second first-stage voltage divider capacitor a balancing mechanism which also accounts for the third low-side switch of the switching unit can be enabled since the second level-2-stage balancing unit node (between the first and second level-2-stage switches) is coupled to the second level-2-stage voltage divider node and thus coupled to the level-2-stage voltage divider.

In the second converter state the first level-2-stage high-side switch can be switched on such that the (herein described) third level-2-stage voltage divider capacitor is coupled to the second first-stage voltage divider capacitor in the circuit, since an electrical path through the switched on second level-2-stage high-side switch is generated. A fourth balancing circuit configuration may be generated allowing a current flow through the third level-2-stage voltage divider capacitor, the second level-2-stage high-side switch, the second first-stage voltage divider capacitor and the third low-side switch of the switching unit. For example, in the fourth balancing circuit configuration an electrical loop may be formed having the third level-2-stage voltage divider capacitor, the second level-2-stage high-side switch, the second first-stage voltage divider capacitor and the third low-side switch of the switching unit connected to each other (via the second level-2-stage node). With the fourth balancing circuit configuration the voltage across the second first-stage voltage divider capacitor may follow the balanced voltage at the third level-2-stage voltage divider capacitor which may balance the voltages across the switches of the switching unit. In some examples, for the set second converter state, the controller may be configured to have the second level-2-stage low-side switch switched off.

Notably, for the second converter state, the balancing mechanism of the first stage may also apply with the level-2-stage integrated into the converter. Hence, the balancing mechanism of the level-2-stage in the second converter state is also coupled to the first stage (particularly to the first-stage voltage divider capacitors) via the interaction of the level-2-stage voltage divider with the first-stage voltage divider via the switching configuration of the level-2-stage balancing unit switches in the second converter state. The interplay of the first stage and the level-2-stage may ensure that a balancing of the switches of the switch unit occurs in the second converter state, particularly for three high-side switches and three low-side switches of the switch unit. For example, in the second converter state the herein described fourth balancing circuit configuration in accordance with the level-2-stage balancing can be generated, and the second balancing circuit configuration in accordance with the first stage balancing can be generated.

In an example, the controller may be further configured to: for the set first converter state: having the first-stage high-side switch and the high-side switches of the level-2-stage switched off (e.g., the first and second level-2-stage high-side switches), having the low-side switches of the level-2-stage switched on (e.g., the first and second level-2-stage low-side switches); for the set second converter state: having the first-stage low-side switch and the low-side switches of the level-2-stage switched off, having the high-side switches of the level-2-stage switched on.

For example, for the set first converter state the following switches are turned on: the first high-side switch, the second high-side switch, the third high-side switch, the first-stage low-side switch, the first level-2-stage low-side switch, the second level-2-stage low-side switch; wherein the following switches are turned off: the first low-side switch, the second low-side switch, the third low-side switches, the first-stage high-side switch, the first level-2-stage high-side switch, the second level-2-stage high-side switch. For example, for the set second converter state the following switches are turned on: the first low-side switch, the second low-side switch, the third low-side switch, the first-stage high-side switch, the first level-2-stage high-side switch, the second level-2-stage high-side switch; wherein the following switches are turned off: the first high-side switch, the second high-side switch, the third high-side switches, the first-stage low-side switch, the first level-2-stage low-side switch, the second level-2-stage low-side switch.

The switching schemes of the first and second converter state for the level-2-stage may ensure that the balancing of the switching unit can occur in a defined manner (e.g., for providing the respective balancing circuit configurations that may enable an according balancing of the switching unit).

In an example, the first level-2-stage high-side switch may be coupled to the first first-stage node and the first level-2-stage balancing unit node (e.g., the respective coupling may be via a direct connection or via one or more resistive elements).

In an example, the first level-2-stage low-side switch may be coupled to the first level-2-stage balancing unit node and the first-stage voltage divider node (e.g., the respective coupling may be via a direct connection or via one or more resistive elements).

In an example, the second level-2-stage high-side switch may be coupled to the first-stage voltage divider node and the second level-2-stage balancing unit node (e.g., the respective coupling may be via a direct connection or via one or more resistive elements).

In an example, the second level-2-stage low-side switch may be coupled to the second level-2-stage balancing unit node and the second first-stage node (e.g., the respective coupling may be via a direct connection or via one or more resistive elements).

In an example, the converter may further comprise: at least one level-n-stage bus comprising a first level-n-stage node and a second level-n-stage node, with n ≥ 3; the switch unit further comprising: a level-n high-side switch connected in series between the first level-n-stage node and an outer level-n-1 high-side switch; a level-n low-side switch connected in series between the second level-n-stage node and an outer level-n-1 low-side switch; at least one level-n-stage, with n ≥ 3, comprising: a level-n-stage voltage divider connected between the first level-n-stage node and the second level-n-stage node, comprising: n+1 level-n-stage voltage divider capacitors connected in series, the n+1 level-n-stage voltage divider capacitors defining respective level-n voltage divider nodes between the level-n-stage voltage divider capacitors, a level-n-stage balancing unit comprising: n pairs of level-n-stage high-side switches and low-side switches connected via respective level-n-stage balancing unit nodes, the respective level-n-stage balancing unit nodes being coupled to respective level-n-stage voltage divider nodes, each of the n pairs of level-n-stage high-side switches and low-side switches being connected parallel to a respective level-n-1-stage voltage divider capacitor, the controller being further configured to: for the set first converter state: having the high-side switches of the switch unit switched on, having the high-side switches of the first stage, the level-2-stage and of the at least one level-n-stage switched off, having the low-side switches of the switching unit switched off, having the low-side switches of the first stage, the level-2-stage and of the at least one level-n-stage switched on; for the set second converter state: having the low-side switches of the switch unit switched on, having the low-side switches of the first stage, the level-2-stage and of the at least one level-n-stage switched off, having the high-side switches of the switching unit switched off, having the high-side switches of the first stage, the level-2-stage and of the at least one level-n-stage switched on.

The herein described mechanism of the first stage, and level-2-stage may be accordingly applied to further level-n-stages which may enable to balancing switching unit with more switches according to the present disclosure.

In an example, the highest level-n-stage bus of the converter may comprise a DC bus. For example, a DC supply voltage may be applied between the first and second level-n-stage nodes of the level-n-stage nodes that belong to the highest level of the converter. For example, the DC supply voltage may be applied via according terminals connected to the highest level-n-stage bus.

For example, according to the herein described disclosure a converter may comprise a level-n-stage with n equal to 3. An according level-3-stage converter may thus comprise a level-3-stage, the level-2-stage and the first stage.

For the level-3-stage converter, the converter may be configured such that four high-side switches of the switch unit (the first, second, third high-side switch and a fourth high-side switch) may function as a single switch, as described herein. Correspondingly, the level-3-stage converter may be configured such that four low-side switches of the switch unit (the first, second, third low-side switch and a fourth low-side switch) may function as a single switch, as described herein.

The balancing for the level-3-stage convert may be enabled by coupling the level-3-stage voltage divider to the level-2-stage voltage divider via the level-3-stage balancing unit and implementing the herein described converter states.

In a further example, according to the herein described disclosure a converter may comprise a level-n-stage with n equal to 4. An according level-4-stage converter may thus comprise a level-4-stage, the level-3-stage, the level-2-stage and the first stage.

For the level-4-stage converter, the converter may be configured such that five high-side switches of the switch unit may function as a single switch, as described herein. Correspondingly, the level-4-stage converter may be configured such that four low-side switches of the switch unit may function as a single switch, as described herein.

The balancing for the level-4-stage convert may be enabled by coupling the level-4-stage voltage divider to the level-3-stage voltage divider via the level-4-stage balancing unit and implementing the herein described converter states.

In an example, the controller may be further configured to: set a transition state with: the switches of all level-n-stage balancing units, with n ≥ 2, being switched off; particularly wherein the controller is configured to set the first converter state and/or second converter state via temporarily setting the transition state.

In an example, the herein described converter may not be configured as a multi-level converter (e.g., the herein described converter may not be configured as a three-level converter or three-level-inverter). For example, the converter may be configured to either provide the respective potentials of the two nodes of the highest level-n-stage bus to the output node or not. For example, if the converter only comprises a first stage, the converter may either provide the potential of the first first-stage node (e.g., a positive DC voltage) at the output node in the first converter state and the potential of the second first-stage node (e.g., a ground potential) at the output node in the second converter state. For example, if the converter comprises a first stage and level-2-stage, the converter may either provide the potential of the first level-2-stage node (e.g., a positive DC voltage) at the output node in the first converter state and the potential of the second level-2-stage node (e.g., a ground potential) at the output node in the second converter state. In an example, the converter may provide a multi-switch-to-single-switch configuration capable of switching between a first potential and a second potential at the output node, wherein the converter is not configured to provide further potentials at the output in a defined manner (e.g., the converter may not be configured to provide a third potential and/or fourth potential at the output node based on the switching configuration of the converter).

A second aspect relates to a method of operating a converter according to the first aspect, the method comprising: setting a first converter state by: switching on the first high-side switch and the second high-side switch, switching off the first low-side switch and the second low-side switch; switching on the first-stage low-side switch, setting a second converter state by: switching on the first low-side switch and the second low-side switch, switching off the first high-side switch and the second high-side switch, switching on the first-stage high-side switch.

In an example, the order of the herein described operations of the method of the second aspect may not be limited to a particular order. For example, for setting the first converter state, switching off the first low-side switch and the second low-side switch may be performed before switching on the first high-side switch and the second high-side switch. For example, for setting the second converter state, switching off the first high-side switch and the second high-side switch may be performed before switching on the first low-side switch and the second low-side switch.

When speaking herein of a switching operation (e.g., switching of a particular switch) it can be regarded as an operation that can evoke a certain switching state of a switch of the converter. For example, if an on-state of a particular switch is desired, the step of switching on the particular switch may be performed to evoke the on-state. When describing multiple switching operations, they may not necessarily be performed in that order as mentioned, rather it may be understood that the switching has to be performed to evoke a certain switching state. Furthermore, a particular order of the switching operations may be implemented according to the present disclosure. For example, a certain sequence of the switching operations may be performed when changing from the first to the second converter state (or when changing from the second to the first converter state), as described herein.

The method may further comprise for setting the first converter state: having the first high-side switch and the second high-side switch switched on, having the first low-side switch and the second low-side switch switched off; having the first-stage low-side switch switched on. For example, the according switching operations may be performed at certain moments in time, and then the switching configuration is held steady over a predetermined period of time to maintain the first converter state.

The method may further comprise for setting the second converter state: having the first low-side switch and the second low-side switch switched on, having the first high-side switch and the second high-side switch switched off, having the first-stage high-side switch switched on. For example, the according switching operations may be performed at certain moments in time, and then the switching configuration is held steady over a predetermined period of time to maintain the second converter state.

In an example, the method may further comprise: setting the first converter state by further: switching on the high-side switches of the switch unit, switching off the low-side switches of the switch unit, switching on the low-side stage switches of the one or more stages of the converter, switching off the high-side stage switches of the one or more stages of the converter, setting the second converter state by further: switching on the low-side switches of the switch unit, switching off the high-side switches of the switch unit, switching on the high-side stage switches of the one or more stages of the converter, switching off the low-side stage switches of the one or more stages of the converter.

In an example, the method may further comprise: setting the first converter state by further: having the high-side switches of the switch unit switched on, having the low-side switches of the switch unit switched off, having the low-side stage switches of the one or more stages of the converter switched on, having the high-side stage switches of the one or more stages of the converter switched off, setting the second converter state by further: having the low-side switches of the switch unit switched on, having the high-side switches of the switch unit switched off, having the high-side stage switches of the one or more stages of the converter switched on, having the low-side stage switches of the one or more stages of the converter switched off.

For example, the according switching operations may be performed at certain moments in time, and then the switching configuration is held steady over a predetermined period of time to maintain the first converter state or second converter state, respectively.

In an example, the method may further comprise changing a converter state from the first to the second converter state, and/or changing the converter state from the second to the first converter state. For example, the method may comprise periodically changing the converter state between the first and second converter state.

In an example, the herein described controller may be configured for periodically changing states between first and second converter states.

A third aspect relates to a computer program for executing the method according to the second aspect. For example, a non-transitory computer-readable medium may comprise instructions that, when executed, cause a controller (particularly a controller for controlling the herein described converter) to perform a method of the second aspect.

Herein described features related to method operations described with respect to the converter or device may accordingly be applied to the herein described method. In the same manner, herein described features related to a method or computer program may be accordingly applied to the herein described converter or device.

### Brief description of the figures

- FIG. 1: shows a converter having a first stage according to examples of the herein described disclosure.
- FIG. 2A/2B: show a simplified view of a first balancing circuit configuration corresponding to a first converter state and a second balancing circuit configuration corresponding to a second converter state of a converter having a first stage according to examples of the herein described disclosure.
- FIG. 3A/3B: show a detailed view of a first converter state and a second converter state of a converter having a first stage according to examples of the herein described disclosure for a first voltage condition across the first-stage balancing capacitor.
- FIG. 4A/4B: show a detailed view of a first converter state and a second converter state of a converter having a first stage according to examples of the herein described disclosure for a second voltage condition across the first-stage balancing capacitor.
- FIG. 5A/5B: show further examples of converter having a first stage according to examples of the herein described disclosure.
- FIG. 6: shows a converter having a first stage and a level-2-stage according to examples of the herein described disclosure.
- FIG. 7A/7B: show a detailed view of a first converter state and a second converter state of a converter having a first stage and a level-2-stage according to examples of the herein described disclosure.

### Detailed description of the figures and of embodiments

Reference will now be made in detail to the various embodiments, one or more examples of which are illustrated in each figure. Each example is provided by way of explanation and is not meant as a limitation. For example, features illustrated or described as part of one embodiment can be used on or in conjunction with any other embodiment to yield yet a further embodiment. It is intended that the present disclosure includes such modifications and variations.

Within the following description of the drawings, the same reference numbers refer to the same or to similar components. In some instances, the same or similar components may be assigned a different reference number, e.g. due to a different configuration within the electronic circuit. Generally, only the differences with respect to the individual embodiments are described. Unless specified otherwise, the description of a part or aspect in one embodiment applies to a corresponding part or aspect in another embodiment as well.

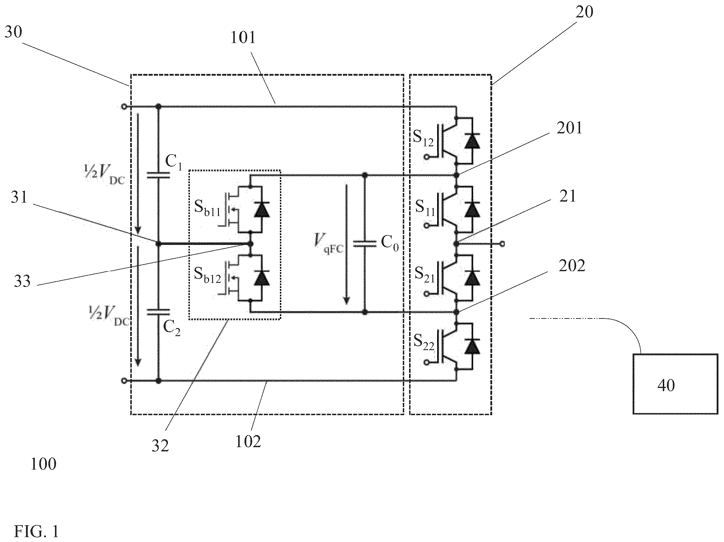

FIG. 1 shows a converter 100 having a first stage 30 according to examples of the herein described disclosure.

The converter 100 comprises a first-stage bus comprising a first first-stage node 101 and a second first-stage node 102. A DC supply voltage V_{DC} may be applied between the first first-stage node 101 and the second first-stage node 102. For example, the first first-stage node 101 may be set on a positive potential with respect to the second first-stage node 102 with the second first-stage node 102 functioning as a reference potential (e.g. a ground potential). For example, the second first-stage node 102 may be considered at 0 V, wherein the first first-stage node 101 may be considered to be at V_{DC}.

In an example, the voltage divider node 31 may be set on a reference potential (e.g., a ground potential of 0 V), with a DC supply voltage V_{DC} being applied between the first first-stage node 101 and the second first-stage node 102, with the electrical potential at the first first-stage node 101 being at +V_{DC}/2 and the electrical potential at the second first-stage node 102 being at -V_{DC}/2 with respect to the reference potential.

The converter 100 further comprises a switch unit 20. The switch unit 20 may comprise a first high-side switch S₁₁, a second high-side switch S₁₂, a first low-side switch S₂₁, and a second low-side switch S₂₂. The switches S₁₁, S₁₂, S₂₁, S₂₂ of the switch unit 20 may be connected in series between the first first-stage node 101 and the second first-stage node 102. For example, the second high-side switch S₁₂ may be connected to the first first-stage node 101. The first high-side switch S₁₁ may be connected to the second high-side switch S₁₂ The first low-side switch S₂₁ may be connected to the first high-side switch S₁₁. The second low-side switch S₂₂ may be connected to the first low-side switch S₂₁.

The switches S₁₁, S₁₂, S₂₁, S₂₂ of the switch unit 20 may be any types of electrical switches (e.g., MOSFETs, IGBTs, HEMTs and/or IGCTs). In the example of FIG. 1 the switches S₁₁, S₁₂, S₂₁, S₂₂ of the switch unit 20 are MOSFETs connected to each other in series via their respective drain and source contacts. The respective gates of the switches S₁₁, S₁₂, S₂₁, S₂₂ of the switch unit 20 can be used to control the state of the respective switch (via the respective gate the according switch may be turned on or off).

Between the first high-side switch S₁₁ and the first low-side switch S₂₁ an output node 21 of the converter 100 may be defined. The output node 21 may be considered the electronic output of the converter to which a physical connector may be attached to such that the electronic output can be coupled to a further load, device or other electric component.

The converter 100 further comprises a first stage 30. The first-stage 30 comprises a first-stage voltage divider connected between the first first-stage node 101 and the second first-stage node 102.

The first-stage voltage divider may comprise a first first-stage voltage divider capacitor C₁ and a second voltage divider capacitor C₂ connected in series wherein a first voltage divider node 31 is defined between the first first-stage voltage divider capacitor C₁ and the second first-stage voltage divider capacitor C₂.

According to the example of FIG. 1 the first first-stage voltage divider capacitor C₁ may be connected to the first first-stage node 101. The second first-stage voltage divider capacitor C₂ may be connected to the second first-stage node 102. Furthermore, the first and second first-stage voltage divider capacitors C₁, C₂ may be connected to each other with the first voltage divider node 31 being defined as a connection node between the first and second first-stage voltage divider capacitors C₁, C₂

As described herein, the voltage divider capacitors may be well balanced. This may ensure that the potential at the first voltage divider node 31 can remain substantially the same for a given DC supply voltage applied between the first and second first-stage nodes 101, 102. Particularly, for a DC supply voltage of V_{DC} a voltage across the first first-stage voltage divider capacitor C₁ may be substantially well balanced onto V_{DC}/2, and a voltage across the second first-stage voltage divider capacitor C₂ may be substantially well balanced onto V_{DC}/2.

The converter 100 further comprises a first-stage balancing capacitor C₀ connected in parallel to the first high-side switch S₁₁ and the first low-side switch S₂₁.

For example, a first balancing node 201 may be defined by the connection between the first and second high-side switches S₁₁, S₂₁. A second balancing node 202 may be defined by the connection between the first and second low-side switches S₂₁, S₂₂.

A first connector of the first-stage balancing capacitor C₀ may be connected to the first balancing node 201. A second connector of the first-stage balancing capacitor C₀ may be connected to the second balancing node 202.

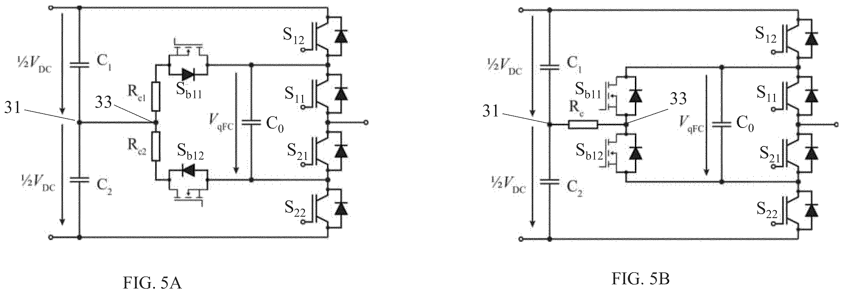

The first-stage may further comprise a first-stage balancing unit 32. The first-stage balancing unit comprises a first-stage high-side switch S_{b11} and a first-stage low-side switch S_{b12} connected in series via a first-stage balancing unit node 33. The first-stage balancing unit node 33 is coupled to the first-stage voltage divider node 31. As describe herein, the coupling may be via a direct connection as shown in FIG. 1. Particularly, in FIG. 1 the first-stage balancing unit node 33 corresponds to the first-stage voltage divider node 31 (and vice versa) such that the first-stage balancing unit node 33 and the first-stage voltage divider node 31 form the same node in the electrical circuit. In other examples, the coupling between the first-stage balancing unit node 33 and the first-stage voltage divider node 31 may be via one or more electrical components (e.g. one or more resistive elements), as described with respect to FIG. 5B.

The first-stage balancing unit 32 may be connected parallel to the first-stage balancing capacitor C₀. The first-stage balancing unit 32 may be understood as an electrical unit which is connected in parallel to the first-stage balancing capacitor C₀.

For example, the series connection of the first-stage high-side switch S_{b11} and the first-stage low-side switch S_{b12} may be connected in parallel to the first-stage balancing capacitor C₀, as shown in FIG. 1. For example, a first connector of the first-stage high-side switch S_{b11} may be connected to the first connector of the first-stage balancing unit capacitor C₀ (or to the first balancing node 201). A second connector of the first-stage high-side switch S_{b11} may be connected to a first connector of of the first-stage low-side switch S_{b12} defining the first-stage balancing unit node 33. A second connector of the first-stage low-side switch S_{b12} may be connected to the second connector of the first-stage balancing capacitor C₀ (or to the second balancing node 202). In some examples, as shown in FIG. 5A, one or more electrical components (e.g., resistive elements) may be present in the first-stage balancing unit 32 wherein such a first-stage balancing unit 32 having one or more further electrical components can also be connected in parallel to the first-stage balancing capacitor C₀.

The converter 100 may further comprise a controller 40. The controller 40 may be communicatively coupled to the switches of the converter 100 (e.g., in FIG. 1 communicatively coupled to the switches S₁₁, S₁₂, S₂₁, S₂₂ of the switch unit 20 and the switches S_{b11}, S_{b12} of the first-stage balancing unit 32). The controller 40 may further be configured to send a control signal to the switches of the converter 100 such that a defined converter state can be achieved defined by the states of the switches of the converter 100.

The controller 40 may be configured to set a first converter state with: the first high-side switch S₁₁ and the second high-side switch S₁₂ being switched on, the first-stage low-side switch S_{b12} being switched on, the first low-side switch S₂₁ and the second low-side switch S₂₂ being switched off. Further, the controller 40 may be configured to have the first-stage high-side switch S_{b11} switched off in the first converter state.

In the first converter state, the high-side switches S₁₁, S₁₂ of the switch unit 20 may function as a single switch as both switched on high-side switches S₁₁, S₁₂ of the switch unit 20 enable that the output node 21 is set substantially on the potential of the first first-stage node 101 (e.g. a current can flow from the first first-stage node 101 to the output node 21). Furthermore, the low-side switches S₂₁, S₂₂ of the switch unit 20 may function as a single switch as both switched off low-side switches S₂₁, S₂₂ of the switch unit 20 block the output node 21 being set onto the second first-stage node 102 potential. The first converter state may be considered a multi-switch-to-single-switch configuration as described herein. In the first converter state, the potential of the first first-stage node 101 (e.g., a positive DC supply voltage) is coupled to the output node.

The controller 40 may be configured to set a second converter state with: the first low-side switch S₂₁ and the second low-side switch S₂₂ being switched on, the first-stage high-side switch S_{b11} being switched on, the first high-side switch S₁₁ and the second high-side switch S₁₂ being switched off. Further, the controller 40 may be configured to have the first-stage low-side switch S_{b12} switched off in the second converter state.

In the second converter state, the low-side switches S₂₁, S₂₂ of the switch unit 20 may function as a single switch as both switched on low-side switches S₂₁, S₂₂ of the switch unit 20 enable that the output node 21 is set substantially on the potential of the second first-stage node 102 (e.g. onto a ground potential). Furthermore, the high-side switches S₁₁, S₁₂ of the switch unit 20 may function as a single switch as both switched off high-side switches S₁₁, S₁₂ of the switch unit 20 block the output node 21 being set onto the first first-stage node 101 potential (e.g. current flow between first first-stage node 101 to the output node 21 is blocked). The second converter state may be considered a multi-switch-to-single-switch configuration as described herein. In the second converter state, the potential of the second first-stage node 102 (e.g., a ground potential) is coupled to the output node.

The converter 100 may enable that the potential of the output node 21 can be switched between two electrical potentials, particularly between the potential of the first and second first-stage nodes 101, 102.

As described herein, due to variances and/or tolerances the voltages across the (turned on) switches S₁₁, S₁₂, S₂₁, S₂₂ of the switch unit 20 may vary. This may lead to undesired electrical effects, for example, an overvoltage at one of the switches of the switching unit. For example, in the first converter state, the first high-side switch S₁₁ and the second high-side switch S₁₂ are turned on and in the conducting mode. In a switching procedure from the first converter state to the second converter state the first high-side switch S₁₁ might be turned off slightly before the second high-side switch S₁₂. Without the herein described balancing by the first stage this variance may lead to the load current immediately charging a parasitic capacitance of the first high-side switch S₁₁ which may lead to a significant overvoltage across the first high-side switch S₁₁.

Also, other variance may occur, for example, when the switches are turned on the voltages across the switches may fluctuate.

The herein described balancing based on the switching scheme of the controller and the hardware of the first stage may ensure that potentially harmful effects of voltage or current variances across the S₁₁, S₁₂, S₂₁, S₂₂ of the switch unit 20 may be reduced at least in part. The output of the converter at the output node 21 may thus be made more stable, particularly for medium voltage applications.

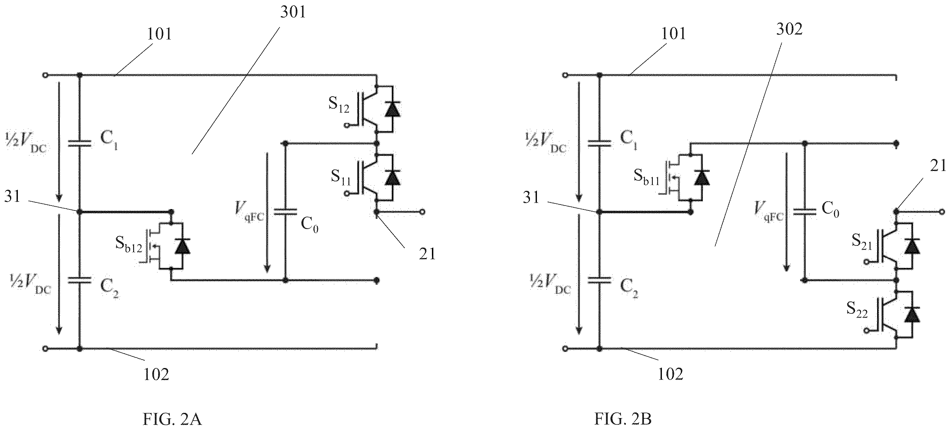

A first understanding of the balancing according to the present disclosure is given by FIG. 2A/2B. The converter in FIG. 2A/2B may comprise the converter 100 described with respect to FIG. 1 or other examples according to the present disclosure. In the examples of FIG. 2A/B a DC supply voltage of V_{DC} is applied between the first and second stage nodes 101, 102.

Particularly, FIG. 2A shows a simplified view of a first balancing circuit configuration 301 corresponding to a first converter state of a converter having a first stage 30 according to examples of the herein described disclosure. In the first converter state the high-side switches S₁₁, S₁₂ of the switch unit 20 are turned off, the low-side switches S₂₁, S₂₂ of the switch unit are turned off. In a first simplification the turned on high-side switches S₁₁, S₁₂ of the switch unit 20 may thus correspond to an electrical connection (e.g., a short) in the circuit. In reality, a certain voltage drop would be present across each of the turned on high-side switches S₁₁, S₁₂. The turned off low-side switches S₂₁, S₂₂ (not shown in FIG. 2A) of the switch unit 20 can be regarded as an electrical open, respectively, in the first converter state.

In FIG. 2A/2B an electrical open of turned off switches is shown by removing the switches. An electrical connection of turned on switches is shown by showing the switches.

In the first converter state, the electrical potential of the first first-stage node 101 may substantially be present at the output node 21 due to the switched on high-side switches S₁₁, S₁₂ of the switch unit 20. For example, the output node 21 may be set onto V_{DC} in the first converter state, if the first first-stage node 101 is set onto V_{DC}. The second first-stage node 102 may be on ground potential (0V). Across the low-side switches S₂₁, S₂₂ an according voltage divider may thus be generated (from output node 21 to second first-stage node 102). Ideally, a voltage of substantially V_{DC}/2 across the first low-side switch S₂₁, and a voltage of substantially V_{DC}/2 across the second low-side switch S₂₂ should be present if the output node 21 is set onto V_{DC}/2 (not shown in FIG. 2A).

As mentioned, in the first converter state, the first-stage low-side switch S_{b12} may be switched on (and the first-stage high-side switch S_{b11} may be switched off). This may enable the first balancing circuit configuration 301 as shown in FIG. 2A. The first balancing circuit configuration 301 may comprise an electrical loop comprising the first first-stage voltage divider capacitor C₁ and the first-stage balancing capacitor C₀ being connected in parallel enabled by the turned on second high-side switch S₁₂ and the turned on first-stage low-side switch S_{b12} (and turned off first-stage high-side switch Sb11).

Since the voltage across the first first-stage voltage divider capacitor C₁ is well balanced to be substantially V_{DC}/2 (as described herein), the voltage across the first-stage balancing capacitor C₀ may essentially follow this voltage across the first first-stage voltage divider capacitor C₁ of V_{DC}/2 since the electrical loop of the first balancing circuit configuration 301 has the boundary condition that voltages across the capacitances should be substantially the same (when the contribution of the voltage drop across the turned on switches S₁₂, S_{b12} can be considered low). In the first converter state the voltage across the first-stage balancing capacitor C₀ may thus be balanced onto the voltage across the first first-stage voltage divider C₁ which is V_{DC}/2, for example.

Variances or fluctuations of voltages across the switches S₁₁, S₁₂, S₂₁, S₂₂ of the switch unit 20 may thus be reduced at least in part since the voltage across the first high-side switch S₁₁ and the first low-side switch S₂₁ is balanced onto the voltage of the (well balanced) first first-stage voltage divider capacitor.

The voltage across the first balancing capacitor C₀ may also be referred to herein as V_{qFC} since the first balancing capacitor C₀ may be regarded a quasi-flying capacitor (as described herein).

FIG. 2B shows a simplified view of a second balancing circuit configuration 302 corresponding to a second converter state of a converter having a first stage 30 according to examples of the herein described disclosure. The herein described mechanism of FIG. 2A may be accordingly be applied to FIG. 2B while accounting for the different switching configuration. In the second converter state the second balancing circuit configuration 302 may comprise an electrical loop comprising the second first-stage voltage divider capacitor C₂ and the first-stage balancing capacitor C₀ being connected in parallel enabled by the turned on second low-side switch S₂₂ and the turned on first-stage high-side switch S_{b11} (and turned off first-stage low-side switch S_{b12}).

Since the voltage across the second first-stage voltage divider capacitor C₂ is well balanced to be substantially V_{DC}/2 (as described herein), the voltage across the first-stage balancing capacitor C₀ may essentially follow this voltage across the first first-stage voltage divider capacitor C₁ of V_{DC}/2 since the electrical loop of the second balancing circuit configuration 302 has the boundary condition that voltages across the capacitances should be substantially the same (when the contribution of the voltage drop across the turned on switches S₂₂, S_{b11} can be considered low). In the second converter state the voltage across the first-stage balancing capacitor C₀ may thus be balanced onto the voltage across the second first-stage voltage divider C₁ which is V_{DC}/2, for example.

The balancing as described with respect to FIG. 2A/B may occur for various types of voltages V_{qFC} across the first-stage balancing capacitor C₀.

For example, the herein described balancing in the first and/or second converter state may be enabled when V_{qFC} > V_{DC}/2. Furthermore, the herein described balancing in the first and/or second converter state may be enabled when V_{qFC} < V_{DC}/2.

Due to the well balancing of the voltage divider capacitors it can be enabled that higher or lower voltage deviations of V_{qFC} with respect to V_{DC}/2 will be balanced onto V_{DC}/2 due to the herein described electrical loops being formed in the first and second balancing circuit configuration, respectively. In the first balancing circuit configuration the direction of the electrical current may differ depending on whether the variance is V_{qFC} > V_{DC}/2 or V_{qFC} < V_{DC}/2. For example, in the first converter state, if V_{qFC} > V_{DC}/2, an electrical current may flow from the first-stage balancing capacitor C₀ through the second high-side switch S₁₂ to the first first-stage voltage divider capacitor C₁ (C₀ may accordingly be discharged). For example, in the first converter state, if V_{qFC} < V_{DC}/2, an electrical current may flow from the first first-stage voltage divider capacitor C₁ through the second high-side switch S₁₂ to the first-stage balancing capacitor C₀ (C₀ may accordingly be charged). Regardless of the type of variance across the switches of the switching unit 20, the first-stage balancing capacitor C₀ may be balanced onto V_{DC}/2 due to the herein described conditions in the electrical loop of the first balancing circuit configuration 301 which may lead to a stabilizing of the voltages across the switches of the switching unit.

In the same manner, variances may be stabilized in the second converter state via the second balancing circuit configuration 302.

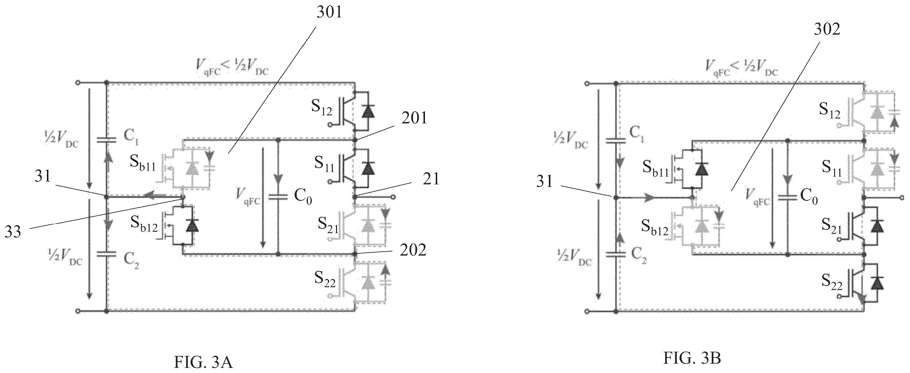

FIG. 3A/3B show a detailed view of a first converter state and a second converter state of a converter 100 having a first stage according to examples of the herein described disclosure for a first voltage condition across the first-stage balancing capacitor C₀. The converter in FIG. 2A/2B may comprise the converter 100 described with respect to FIG. 1 or other examples according to the present disclosure. In FIG. 3A/3B turned off switches are marked grey, turned on switches are marked black.

Particularly, FIG. 3A may correspond to an adapted first converter state and FIG. 3B may correspond to an adapted second converter state. In the adapted first and second converter state no switching condition is applied to the first-stage balancing unit switches S_{b11}, S_{b12}. For example, when the first-stage balancing unit switches are MOSFETs no particular control signal may be applied to the respective gates of the MOSFETs. If V_{qFC} < V_{DC}/2 (as shown in FIG. 3A) balancing of the first-stage balancing capacitor C₀ may still be enabled as the (body) diodes of the MOSFETs may enable the first balancing circuit configuration under this variance condition.

For example, in FIG. 3A, in the first adapted converter state, the first and second high-side switches S₁₁, S₁₂ may be switched on and the first and second low-side switches S₂₁, S₂₂ may be switched off. No control condition is applied to the first stage switches S_{b11}, S_{b12}. If the voltage across the first-stage balancing capacitor C₀ may be V_{qFC} < V_{DC}/2 (e.g. due to a variance) the first-stage low-side switch S_{b12} can be considered to be conductive and in an on-state allowing a current flow through the first-stage low-side switch S_{b12}.For example, if V_{qFC} < V_{DC}/2, the potential at the second balancing node 202 may be regarded more positive than the potential at the first stage balancing unit node 33 (or the first-stage voltage divider node 31). This may cause the (body) diode of first-stage low-side switch S_{b12} to be conductive and the first-stage low side switch S_{b12} could be regarded as being in the switched-on state. Accordingly, the herein described mechanism with respect to FIG. 2A may be applicable to FIG. 3A. Particularly, the first balancing circuit configuration 301 can be enabled without a particular switching condition applied to the first stage in the first adapted converter state. Furthermore, as described, no control condition is applied to the first stage switches S_{b11}, S_{b12}. If V_{qFC} < V_{DC}/2, the potential at the first balancing node 201 may be regarded more positive than the potential at the first stage balancing unit node 33 (or the first-stage voltage divider node 31). Accordingly, the (body) diode of first-stage high-side switch S_{b11} may not turn on and the first-stage high-side switch. Accordingly, S_{b11} could be regarded as being in the switched-off state, in the first adapted converter state.

Furthermore, FIG. 3A shows the current flow in the first adapted converter state from the first first-stage voltage divider capacitor C₁ through the second high-side switch S₁₂ to the first-stage balancing capacitor C₀ and through the first-stage high-side switch S_{b12}. It can also be seen in FIG. 3A that a leakage current may flow through the (body) diode of the first-stage high-side switch S_{b12} even when the (body) diode is considered to be off. Also, a current can flow through the second voltage divider capacitor C₂ in the first balancing circuit configuration 301.

The mechanism described with respect to FIG. 3A may accordingly be applied to FIG. 3B. If V_{qFC} < V_{DC}/2 (as shown in FIG. 3B) balancing of the first-stage balancing capacitor C₀ may still be enabled as the (body) diodes of the MOSFETs may enable the second balancing circuit configuration 302 under this variance condition. For example, in FIG. 3A, in the second adapted converter state, the first and second high-side switches S₁₁, S₁₂ may be switched off and the first and second low-side switches S₂₁, S₂₂ may be switched on. In FIG. 3B no control condition is applied to the first-stage switches S_{b11}, S_{b12}. Since V_{qFC} < V_{DC}/2 this may lead to the condition that the diode of the first-stage high-side switch S_{b11} is considered to be turned on, whereas the diode of first-stage low-side switch S_{b12} is considered to be turned off. The second balancing circuit configuration 302 may thus be enabled.

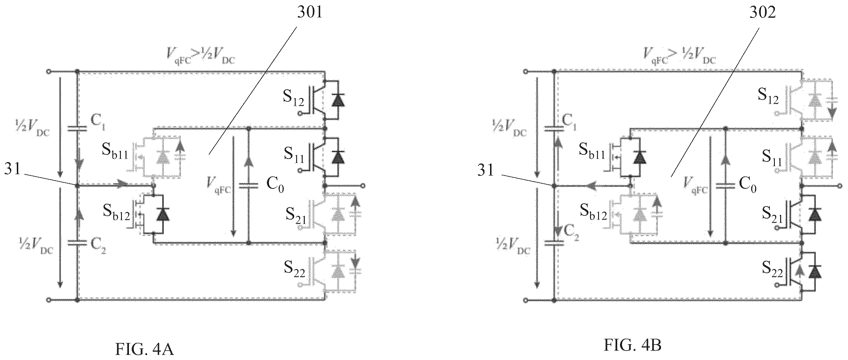

FIG. 4A/4B show a detailed view of a first converter state and a second converter state of a converter having a first stage according to examples of the herein described disclosure for a second voltage condition across the first-stage balancing capacitor. FIG. 4A/B could be regarded a more detailed view of FIG. 3A/B. In FIG. 4A/4B turned off switches are marked grey, turned on switches are marked black.

FIG. 4A corresponds to the first converter state as described for FIG. 3A. Particularly, the variance condition V_{qFC} < V_{DC}/2 is present. Due to the actively switched on first-stage low-side switch S_{b12} the first balancing circuit condition 301 is enabled. Accordingly, the voltage across the first-stage balancing capacitor C₀ can be balanced onto V_{DC}/2 which can lead to a stabilization of the voltages across the switches of the switch unit 20 at least in part. Furthermore, the first-stage high-side switch S_{b11} is actively switched off. FIG. 4A also shows the electrical current flowing through the circuit. A leakage current may flow through the actively switched off first-stage high-side switch, as can be seen in FIG. 4A and a current may also flow through the second first-stage voltage divider capacitor C₂.

The mechanism described with respect to FIG. 3A may accordingly be applied to FIG. 3B. FIG. 4B corresponds to the second converter state as described for FIG. 3B. Particularly, the variance condition V_{qFC} < V_{DC}/2 is present. Due to the actively switched on first-stage high-side switch S_{b12} (and actively switched off first-stage low-side switch S_{b11}) the second balancing circuit condition 302 is enabled.

In an example, the converter 100 may be configured to measure a voltage difference across one or more devices of the converter 100, particularly the first-stage balancing capacitor C₀. In an example, the switching signal for the first-stage high-side switch S_{b11} and the first-stage low-side switch S_{b12} may be generated by measuring and comparing voltage differences of the capacitor voltages (particularly the voltage V_{qFC}) or the voltage across the electrical devices of the converter 100. According measurement and calculation values can be locally fed to an analog or digital circuit in order to generate the switching signal.

The switching signal may also be an external signal.

In an example, the switching configuration of the first and second converter state is not necessarily based on a voltage measurement. The herein described switching configuration for the first and second converter states can enable that regardless of whether V_{qFC} < V_{DC}/2 or V_{qFC} > V_{DC}/2 the balancing can occur. The converter may for example, be controlled by an external signaling which causes the converter 100 to be set into the first converter state or second converter state, respectively.

In an example, the controller 40 may be configured to switch periodically between the first and second converter state which may comprise setting the transition states, as described herein. For example, in a transition state all switches S_{b11}, S_{b12} of the first-stage balancing unit may be switched off. Subsequently, the switches S₁₁, S₁₂, S₂₁, S₂₂ of the switch unit 20 may be accordingly switched depending whether the converter is switching from the first to the second converter state or vice versa. Subsequently, the according switch of the first-stage balancing unit 32 is switched depending on which converter state is to be set (the first or second converter state).

FIG. 5A/5B show further examples of converter having a first stage according to examples of the herein described disclosure. Particularly, FIG. 5A/B show examples where the first-stage balancing unit comprises one or more resistive elements (e.g., one or more resistors).

FIG. 5B shows an example where a first current limiting resistor is positioned between the first-stage voltage divider node 31 and the first-stage balancing unit node 30. The first-stage balancing unit node 33 may thus be coupled to the first-stage voltage divider node 31 via the first-current limiting resistor.

FIG. 5A shows an example where a second current limiting resistor is connected in series with the first-stage high-side switch S_{b11}. The second current limiting resistor may be positioned between the first-stage balancing unit node 31 and the first-stage high-side switch S_{b11}. The second current limiting resistor may also be positioned at the other side of the first-stage high-side switch S_{b11} (between the first-stage high-side switch S_{b11} and the first connector of the first-stage balancing capacitor C₀). Furthermore, a third current limiting resistor is positioned between the first-stage balancing unit node and the first-stage low-side switch. The third current limiting resistor may also be positioned at the other side of the first-stage low-side switch S_{b12} (between the first-stage low-side switch S_{b12} and the second connector of the first-stage balancing capacitor C₀).

As described herein, the first-stage balancing unit is connected parallel to the first-stage balancing capacitor. In the example of FIG. 5A, the electrical connection of the first-stage low-side switch S_{b12}, the third current limiting resistor, the second current limiting resistor and the first-stage high-side switch S_{b11} is connected as a unit parallel to the first-stage balancing capacitor C₀.

In the example of FIG. 5B, the electrical connection of the first current limiting resistor and the first-stage low-side switch S_{b12} and the first-stage high-side switch S_{b11} is connected as a unit parallel to the first-stage balancing capacitor C₀.

The herein described current limiting resistors may enable to avoid high current spikes during the recharging process that may occur in the first and second balancing circuit configuration, respectively.

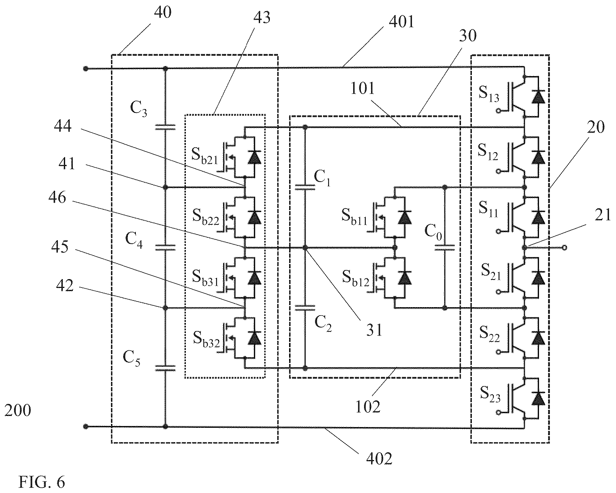

FIG. 6 shows a converter 200 having a first stage 30 and a level-2-stage 40 according to examples of the herein described disclosure.

Particularly, the converter 200 comprises the features of converter 100. For example, converter 200 comprises the first-stage bus comprising the first first-stage node 101 and the second first-stage node 101. Furthermore, the converter 200 comprises the first-stage 30.

The herein described aspects for the converter 100 may be accordingly be applied to the converter 200.

Furthermore, the converter 200 comprises a level-2-stage bus comprising a first level-2-stage node 401 and a second level-2-stage node 402. A DC supply voltage (e.g., V_{DC}) may be applied between the first and second level-2-stage nodes 401, 402. For example, the first level-2-stage node 401 may be set on a positive potential with respect to the second level-2-stage node 402 with the second level-2-stage node 402 functioning as a reference potential (e.g. a ground potential). For example, the second level-2-stage node 402 may be considered at 0 V, wherein the first level-2-stage node 401 may be considered to be at V_{DC}.

The converter 200 may comprise a switching unit 20 as described herein for converter 100, wherein the switching unit further comprises a third high-side switch S₁₃ connected in series between the second high-side switch S₁₂ and the first level-2-stage node 401 and a third low-side switch S₂₃ connected in series between the second low-side switch S₂₂ and the second level-2-stage node 402. The high-side switches of the switch unit 20 may function as essentially one switch, and the low-side switches of the switch unit 20 may function as essentially one switch, as described herein.

The converter 200 may be configured such that either the potential of the first level-2-stage node 401 or the potential of the second level-2-stage node 402 is applied to the output node 21 via the herein described first and second converter states, respectively.

Furthermore, the converter 200 may comprise a level-2-stage 40. The level-2-stage may comprise a level-2-stage voltage divider connected between the first level-2-stage node and the second level-2-stage node. The level-2-stage voltage divider may comprise a first level-2-stage voltage divider capacitor C₃, a second level-2-stage voltage divider capacitor C₄, a third level-2-stage voltage divider capacitor C₅ connected in series (as shown in FIG. 6). Between the first and second level-2-stage voltage divider capacitors C₃, C₄ a first level-2-stage voltage divider node 41 may be defined. Between the second and third level-2-stage voltage divider a second level-2-stage voltage divider node 42 may be defined.

The capacitors of the level-2-stage voltage divider may be well balanced (e.g., as described herein actively or passively). The voltage balancing of the level-2-stage voltage divider may ensure that the voltages across the level-2-stage voltage divider can remain substantially constant for a given DC supply voltage at the level-2-stage bus. The voltage balancing of the level-2-stage voltage divider may ensure that for a given DC supply voltage at the level-2-stage bus the DC supply voltage is substantially evenly distributed on the level-2-stage voltage divider capacitors such that the voltage across each level-2-stage voltage divider capacitor is substantially the same. For example, the first level-2-stage node 401 may be set onto V_{DC} with the second level-2-stage node 402 being a respective ground potential (e.g., of 0V). In such a case, the voltage across the first level-2-stage voltage divider capacitor C₃ may substantially be V_{DC}/3, the voltage across the second level-2-stage voltage divider capacitor C₃ may substantially be V_{DC}/3, and the voltage across the third level-2-stage voltage divider capacitor C₃ may substantially be V_{DC}/3.

The level-2-stage 40 may comprise a level-2-stage balancing unit 43. The level-2-stage balancing unit 43 may comprise a first switch pair comprising a first level-2-stage high-side switch S_{b21} and a first level-2-stage low-side switch S_{b22} connected in series via a first level-2-stage balancing unit node 44. The first level-2-stage balancing unit node 44 may be coupled to the first level-2-stage voltage divider node 41. The first level-2-stage high-side switch S_{b21} and the first level-2-stage low-side switch S_{b22} may be connected parallel to the first first-stage voltage divider capacitor C1.

The level-2-stage balancing unit 43 may further comprise a second switch pair comprising a second level-2-stage high-side switch S_{b31} and a second level-2-stage low-side switch S_{b32} connected in series via a second level-2-stage balancing unit node 45. The second level-2-stage balancing unit node 45 may be coupled to the second level-2-stage voltage divider node 42. The second level-2-stage high-side switch S_{b31} and the second level-2-stage low-side switch S_{b32} may be connected parallel to the second first-stage voltage divider capacitor C2.

The converter 200 may further comprise a controller (not shown) which may be communicatively coupled to the switches of the converter 200 for controlling the state of the respective switches. Particularly, the converter 200 may be configured to set the first and second converter state, respectively.

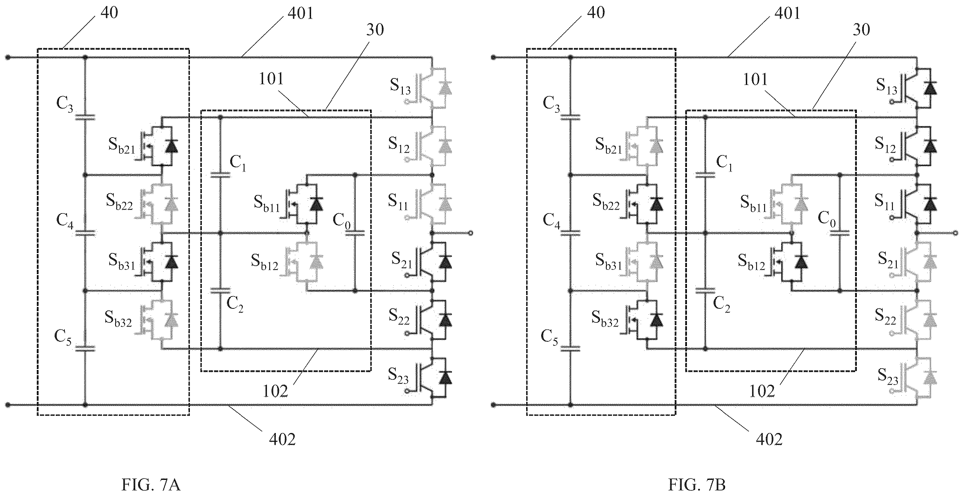

FIG. 7A/7B show a detailed view of a first converter state and a second converter state of a converter 200 having a first stage 30 and a level-2-stage 40 according to examples of the herein described disclosure.

Particularly, FIG. 7B shows the converter 200 in the first converter state and FIG. 7A shows the converter 200 in the second converter state. In FIG. 7A/7B turned off switches are marked grey, turned on switches are marked black.

The controller of converter 200 may be configured to have the following switches switched on in the first converter state: the high-side switches S₁₁, S₁₂, S₁₃ of the switch unit 20, the first-stage low-side switch S_{b12}, the first level-2-stage low-side switch S_{b22} and the second level-2-stage low-side switch S_{b32}. The controller of converter 200 may be configured to have the following switches switched off in the first converter state: the low-side switches S₂₁, S₂₂, S₂₃ of the switch unit 20, the first-stage high-side switch S_{b11}, the first level-2-stage high-side switch S_{b21} and the second level-2-stage high-side switch S_{b31}.

In the first converter state the first balancing circuit configuration 301 as explained for converter 100 can be created in converter 200. Furthermore, a third balancing circuit configuration can be generated.

The third balancing circuit configuration may comprise an electrical loop comprising the first level-2-stage voltage divider capacitor C₃ and the first first-stage voltage divider capacitor C₁ being connected in parallel enabled by the turned on third high-side switch S₁₃ and the turned on level-2-stage low-side switch S_{b22} (and turned off level-2-stage high-side switch S_{b21}).

Since the voltage across the first level-2-stage voltage divider capacitor C₃ is well balanced to be substantially V_{DC}/3 (as described herein), the voltage across the first first-stage voltage divider capacitor C₁ may essentially follow the voltage across the first level-2-stage voltage divider capacitor C₃ of V_{DC}/3 since the electrical loop of the third balancing circuit configuration has the boundary condition that voltages across the capacitances should be substantially the same (when the contribution of the voltage drop across the turned on switches S₁₃, S_{b22} can be considered low). In the first converter state the voltage across the first first-stage voltage divider capacitor C₁ may thus be balanced onto the voltage across the first level-2-stage voltage divider C₃ which is V_{DC}/3, for example.

In the first converter state of the converter 200, with the balanced voltage across the first first-stage voltage divider capacitor C₁ being provided, the herein described balancing of the first-stage balancing capacitor C₀ may occur accordingly. The first converter state may thus provide that the voltages across the switches of the switching unit 20 may be balanced. Effects of the herein described variances or tolerances may thus be reduced at least in part. This may enable that a more stable voltage output can be set at the output node 21 in the first converter state.

The controller of converter 200 may be configured to have the following switches switched off in the second converter state: the high-side switches S₁₁, S₁₂, S₁₃ of the switch unit 20, the first-stage low-side switch S_{b12}, the first level-2-stage low-side switch S_{b22} and the second level-2-stage low-side switch S_{b32}. The controller of converter 200 may be configured to have the following switches switched on in the first converter state: the low-side switches S₂₁, S₂₂, S₂₃ of the switch unit 20, the first-stage high-side switch S_{b11}, the first level-2-stage high-side switch S_{b21} and the second level-2-stage high-side switch S_{b31}.

In the second converter state the first balancing circuit configuration 302 as explained for converter 100 can be created in converter 200. Furthermore, a fourth balancing circuit configuration can be generated.

The fourth balancing circuit configuration may comprise an electrical loop comprising the third level-2-stage voltage divider capacitor C₅ and the second first-stage voltage divider capacitor C₂ being connected in parallel enabled by the turned on third low-side switch S₂₃ and the turned on level-2-stage high-side switch S_{b31} (and turned off level-2-stage low-side switch S_{b32}).

Since the voltage across the third level-2-stage voltage divider capacitor C₅ is well balanced to be substantially V_{DC}/3 (as described herein), the voltage across the second first-stage voltage divider capacitor C₂ may essentially follow the voltage across the third level-2-stage voltage divider capacitor C₅ of V_{DC}/3 since the electrical loop of the fourth balancing circuit configuration has the boundary condition that voltages across the capacitances should be substantially the same (when the contribution of the voltage drop across the turned on switches S₂₃, S_{b31} can be considered low). In the second converter state the voltage across the second first-stage voltage divider capacitor C₂ may thus be balanced onto the voltage across the third level-2-stage voltage divider C₅ which is V_{DC}/3, for example.

In the second converter state of the converter 200, with the balanced voltage across the second first-stage voltage divider capacitor C₂ being provided, the herein described balancing of the first-stage balancing capacitor C₀ may occur accordingly. The first converter state may thus provide that the voltages across the switches of the switching unit 20 may be balanced. Effects of the herein described variances or tolerances may thus be reduced at least in part. This may enable that a more stable voltage output can be set at the output node 21 in the second converter state.

For the level-2-stage converter 200 the controller may be configured to switch periodically between the first and second converter state which may comprise setting the transition states, as described herein. For example, in a transition state all switches S_{b11}, S_{b12} of the first-stage balancing unit and of the level-2-stage balancing unit S_{b21}, S_{b22}, S_{b31}, S_{b32} may be switched off. Subsequently, the switches S₁₁, S₁₂, S₁₃, S₂₁, S₂₂, S₂₃ of the switch unit 20 may be accordingly switched depending whether the converter is switching from the first to the second converter state or vice versa. Subsequently, the according switch of the first-stage balancing unit 32 and the according switches of the level-2-stage balancing unit 43 are switched depending on which converter state is to be set (the first or second converter state).

As described herein, also converters with more than a first stage and a level-2-stage may be formed according to the present disclosure. For example, a level-3-stage converter may comprise the herein described converter 200 with an according level-3-stage coupled to the level-2-stage, and a level-3-stage bus, and a fourth high-side and a fourth low-side switch at the switching unit 20.

According to an aspect the herein described converters may be configured for switching a medium voltage (e.g., a medium DC voltage, V_{DC}). A medium voltage may be voltage of above 1 kV, such as a voltage between 1 kV - 52 kV, particularly between 1 kV - 30 kV. For example, a medium voltage may be a voltage received, and optionally rectified, from a medium voltage grid, such as a 10 kV grid, a 15 kV grid, a 20 kV grid, a 25 kV grid, a 30 kV grid, or even a 50 kV grid.

## Claims

1. A converter (100) comprising:
a first-stage bus comprising a first first-stage node (101) and a second first-stage node (102);
a switch unit comprising:
a first high-side switch (S₁₁), a second high-side switch (S₁₂), a first low-side switch (S₂₁), and a second low-side switch (S₂₂) connected in series between the first first-stage node (101) and the second first-stage node;
an output node (21) defined between the first high-side switch (S₁₁) and the first low-side switch (S₂₁);
a first stage (30) comprising:
a first-stage voltage divider connected between the first first-stage node (101) and the second first-stage node (102), comprising:
a first first-stage voltage divider capacitor (C₁) and a second first-stage voltage divider capacitor (C₂) connected in series, defining a first voltage divider node (31) between the first first-stage voltage divider capacitor (C₁) and the second first-stage voltage divider capacitor (C₂);
a first-stage balancing capacitor (C₀) connected in parallel to the first high-side switch (S₁₁) and the first low-side switch (S₂₁);
a first-stage balancing unit (32) comprising:
a first-stage high-side switch (S_{b11}) and a first-stage low-side switch (S_{b12}) connected in series via a first-stage balancing unit node (33),
the first-stage balancing unit node (33) being coupled to the first-stage voltage divider node (31),
the first-stage balancing unit (32) being connected parallel to the first-stage balancing capacitor (C₀);
a controller (40) for controlling the switches of the converter, the controller configured to:
set a first converter state with:
the first high-side switch (S₁₁) and the second high-side switch (S₁₂) being switched on,
the first-stage low-side switch (S_{b12}) being switched on,
the first low-side switch (S₂₁) and the second low-side switch (S₂₂) being switched off;
set a second converter state with:
the first low-side switch (S₂₁) and the second low-side switch (S₂₂) being switched on,
the first-stage high-side switch (S_{b11}) being switched on,
the first high-side switch (S₁₁) and the second high-side switch (S₁₂) being switched off.

2. The converter according to claim 1, wherein the controller is further configured to:
in the set first converter state, having the first-stage high-side switch (S_{b11}) switched off;
in the set second converter state, having the first-stage low-side switch (S_{b12}) switched off.

3. The converter according to any of claims 1-2, wherein the converter is configured such that:
during the first converter state a first balancing circuit configuration (301) is generated allowing an electrical current flow through the first-stage low-side switch (S_{b12}), the first-stage balancing capacitor (C₀), the second high-side switch (S₁₂) and the first-stage voltage divider node (31); and
during the second converter state a second balancing circuit configuration (302) is generated allowing an electrical current flow through the first-stage high-side switch (S_{b11}), the first-stage balancing capacitor (C₀), the second low-side switch (S₂₂) and the first-stage voltage divider node (31).

4. The converter according to any of claims 1-3, wherein the converter is configured such that:
in the first converter state and in the second converter state a voltage (V_{qFC}) across the first-stage balancing capacitor (C₀) is balanced onto a balance voltage corresponding to a potential difference between the first-stage voltage divider node (31) and the second first-stage node (102).

5. The converter according to any of claims 1-4, the controller being further configured to:
set a transition state with:
the first-stage low-side switch (S_{b12}) and the first-stage high-side switch (S_{b11}) being switched off;
particularly wherein the controller is further configured to set the first converter state and/or second converter state via temporarily setting the transition state.

6. The converter according to any of claims 1-5, wherein the first-stage balancing unit comprises:
a first current limiting resistor (R_{C}) connected in series between the first-stage voltage divider node (31) and the first-stage balancing unit node (33).

7. The converter according to any of claims 1-6, wherein the first-stage balancing unit comprises:
a second current limiting resistor (R_{C1}) connected in series to the first-stage high-side switch (S_{b11}); and/or
a third current limiting resistor (R_{C2}) connected in series to the first-stage low-side switch (S_{b12}).

8. The converter according to any of claims 1-7, further comprising:
a level-2-stage bus comprising a first level-2-stage node (401) and a second level-2-stage node (402);
the switch unit (20) further comprising:
a third high-side switch (S₁₃) connected in series between the second high-side switch (S₁₂) and the first level-2-stage node;
a third low-side switch (S₂₃) connected in series between the second low-side switch (S₂₂) and the second level-2-stage node;
a level-2-stage (40) comprising:
a level-2-stage voltage divider connected between the first level-2-stage node and the second level-2-stage node, comprising:
a plurality of level-2-stage voltage divider capacitors (C₃, C₄, C₅) connected in series, the plurality of level-2-stage voltage divider capacitors defining a first level-2-stage voltage divider node (41)
and defining a second level-2-stage voltage divider node (42);
a level-2-stage balancing unit (43) comprising:
a first level-2-stage high-side switch (S_{b21}) and a first level-2-stage low-side switch (S_{b22}) connected in series via a first level-2-stage balancing unit node (44),
the first level-2-stage balancing unit node (44) being coupled to the first level-2-stage voltage divider node (41),
the first level-2-stage high-side switch (S_{b21}) and the first level-2-stage low-side switch (S_{b22}) being connected parallel to the first first-stage voltage divider capacitor (C₁);
the controller being further configured to:
for the set first converter state:
having the high-side switches (S₁₃, S₁₂, S₁₁) of the switch unit switched on,
having the low-side switches (S₂₁, S₂₂, S₂₃) of the switch unit switched off.
having the first-stage low-side switch (S_{b12}) and the first level-2-stage low-side switch (S_{b22}) switched on.

9. The converter according to claim 8,
the level-2-stage balancing unit (43) further comprising:
a second level-2-stage high-side switch (S_{b31}) and a second level-2-stage low-side switch (S_{b32}) connected in series via a second level-2-stage balancing unit node,
the second level-2-stage balancing unit node (45) being coupled to the second level-2-stage voltage divider node (42),
the second level-2-stage high-side switch (S_{b31}) and the second level-2-stage low-side switch (S_{b32}) being connected parallel to
the second first-stage voltage divider capacitor (C₂),
the controller being further configured to:
for the set second converter state:
having the low-side switches (S₂₁, S₂₂, S₂₃) of the switch unit switched on,
having the high-side switches (S₁₃, S₁₂, S₁₁) of the switching unit switched off,
having the first-stage high-side switch (S_{b11}) and the second level-2-stage high-side switch (S_{b31}) switched on.

10. The converter according to claim 9, the controller being further configured to:
for the set first converter state:
having the first-stage high-side switch (S_{b11}) and the high-side switches (S_{b21}, S_{b31}) of the level-2-stage switched off,
having the low-side switches (S_{b22}, S_{b32}) of the level-2-stage switched on;
for the set second converter state:
having the first-stage low-side switch (S_{b12}) and the low-side switches (S_{b22}, S_{b32}) of the level-2-stage switched off,
having the high-side switches (S_{b21}, S_{b31}) of the level-2-stage switched on.

11. The converter according to any of claims 8-10, further comprising:
at least one level-n-stage bus comprising a first level-n-stage node and a second level-n-stage node, with n ≥ 3;
the switch unit (20) further comprising:
a level-n high-side switch connected in series between the first level-n-stage node and an outer level-n-1 high-side switch;
a level-n low-side switch connected in series between the second level-n-stage node and an outer level-n-1 low-side switch;
at least one level-n-stage, with n ≥ 3, comprising:
a level-n-stage voltage divider connected between the first level-n-stage node and the second level-n-stage node, comprising:
n+1 level-n-stage voltage divider capacitors connected in series, the n+1 level-n-stage voltage divider capacitors defining respective level-n voltage divider nodes between the level-n-stage voltage divider capacitors,
a level-n-stage balancing unit comprising:
n pairs of level-n-stage high-side switches and low-side switches connected via respective level-n-stage balancing unit nodes,
the respective level-n-stage balancing unit nodes being coupled to respective level-n-stage voltage divider nodes,
each of the n pairs of level-n-stage high-side switches and low-side switches being connected parallel to a respective level-n-1-stage voltage divider capacitor,
the controller being further configured to:
for the set first converter state:
having the high-side switches of the switch unit switched on,
having the high-side switches of the first stage, the level-2-stage and of the at least one level-n-stage switched off,
having the low-side switches of the switching unit switched off,
having the low-side switches of the first stage, the level-2-stage and of
the at least one level-n-stage switched on;
for the set second converter state:
having the low-side switches of the switch unit switched on,
having the low-side switches of the first stage, the level-2-stage and of the at least one level-n-stage switched off,
having the high-side switches of the switching unit switched off,
having the high-side switches of the first stage, the level-2-stage and of the at least one level-n-stage switched on.

12. The converter according to any of 8-11, the controller being further configured to:
set a transition state with:
the switches of all level-n-stage balancing units, with n ≥ 2, being switched off;
particularly wherein the controller is configured to set the first converter state and/or second converter state via temporarily setting the transition state.

13. Method of operating a converter according to any of claims 1-12, the method comprising:
setting a first converter state by:
switching on the first high-side switch (S₁₁) and the second high-side switch (S₁₂),
switching off the first low-side switch (S₂₁) and the second low-side switch (S₂₂);
switching on the first-stage low-side switch (S_{b12}),
setting a second converter state by:
switching on the first low-side switch (S₂₁) and the second low-side switch (S₂₂),
switching off the first high-side switch (S₁₁) and the second high-side switch (S₁₂),
switching on the first-stage high-side switch (S_{b11}).

14. Method according to claim 13, the method further comprising:
setting the first converter state by further:
switching on the high-side switches of the switch unit (S₁₁, S₁₂, S₁₃,),
switching off the low-side switches of the switch unit (S₂₁, S₂₂, S₂₃),
switching on the low-side stage switches of the one or more stages of the converter (S_{b12}, S_{b22}, S_{b32}),
switching off the high-side stage switches of the one or more stages of the converter (S_{b11}, S_{b21}, S_{b31}),
setting the second converter state by further:
switching on the low-side switches of the switch unit (S₂₁, S₂₂, S₂₃),
switching off the high-side switches of the switch unit (S₁₁, S₁₂, S₁₃,),
switching on the high-side stage switches of the one or more stages of the converter (S_{b11}, S_{b21}, S_{b31}),
switching off the low-side stage switches of the one or more stages of the converter (S_{b12}, S_{b22}, S_{b32}).

15. Computer program for executing the method according to any of claims 13-14.
